# EUROPEAN PATENT APPLICATION

(11) **EP 3 210 565 A1**
(43) Date of publication of application: **30.08.2017**
(21) Application number: 14900712.2
(22) Date of filing: 28.08.2014
(51) Int. Cl.: A61C 8/00, A61C 13/30, A61C 13/225

(54) **IMPROVEMENT TO DENTAL IMPLANT**

(30) Priority: 27.08.2014 BR 102014021198
(71) Applicant: Thum, Lotário, 892-02005 Joinville - SC (BR)
(72) Inventor: Thum, Lotário, 892-02005 Joinville - SC (BR)
(74) Representative: Urizar Anasagasti, Jesus Maria
(86) International application number: PCT/BR2014/000299
(87) International publication number: WO 2016/029281

(57) **Abstract**

Improvement in dental implant (1) belonging to the dentistry field, more precisely the implantology, comprising, basically: substantially cylindrical body (2) provided with a tip or top (3), intermediate section (4) and view tip (5), in which is provided top surface (6) featuring an non-passing (7) axial negative (crease) surface; the outer surface of said implant (1) is defined: by extreme third provided with thread (10) attached to the tip or top (3); by opposing extreme third provided with a thread (10') attached to the top surface (6); and by intermediate smooth third (without thread) (11), with a concave curved profile, characterized by two trunk-conical sections connected by the smaller bases, with curved concave profiles and whose larger bases are adjacent to threads (10) and (10)'.

## Description

This descriptive report refers to a patent application for dental implant belonging to the dentistry field, more precisely the implantology, which has been improved in order to accelerate the process of bone-integration.

A widespread form of oral restoration provides for the use of dental implants. Dental implants are typically composed essentially of: the implant itself in substantial form of screw which is screwed into the bone featuring a non-passing axial opening (crease) extending from the top surface; by pillar fixed in said non-passing opening and with the top-end projected therefrom; and by a crown (dental prosthesis) attached to the top-end of the abutment. The implant usually has the outer surface generally varying between cylindrical and conical and provided with thread.

What is observed in the state of the art regarding dental implants is the repetition of form, that is to say that all the implants manufactured today have the same characteristic, and the changes take place in the form of presentation of the thread, modification of thread, hybrid thread, thread with surface treatment by sandblasting, titanium plasma cutting thermal spraying, deposition of hydroxyapatites on the surface of implants modified by thermal spraying, application of plasma spray (thermal process), anodic oxidation or anodizing, deposition or application of bio-ceramic layers, sulfuric, hydrochloric acid etching, always maintaining the profile varying between cylindrical and conical.

It occurs that all implants of the state of art, in the global market, with the configuration as described above, when installed, promote the compaction of the bone on the surface of the implants, thus inhibiting and removing all the liquids from the tissue, among them, most importantly, the blood, responsible for the regeneration of the tissues. This bone compaction on the surface of the implant prevents the free change and the formation of new immediate vascularization. Thereby, the organism undergoes a process of, at first, installing a mechanism to remove the compacted bone so as to, later, provide the reconstituting elements with access to the surface of the implant for the formation of new nutrient vessels, and, therefore, start the bone formation process and occur the bone-integration implant - bone. As a result, the patient's recovery and consequently the treatment are relatively long and with high costs, thus hampering the access to a wide range of the population.

The purpose of this patent is to provide a dental implant that overcomes the drawbacks of the usual implants, especially in the sense of accelerating the bone-integration.

Another goal is to provide an implant built and manufactured with facilities substantially within the normally observed standards for that part type.

Furthermore, the purpose of this patent is to provide a cost-efficient implant that is relatively equivalent to the similar ones, but providing accelerated treatment and, as a result, cost-reduction benefits.

In view of the above-mentioned problems and in order to overcome them and meet the related goals, the improvement introduced in dental implant, object of this patent, has been developed, which is comprised essentially of the usual body in substantially cylindrical shape featuring, from the top-end, the receiving non-passing opening of the abutment on which the prosthesis is fixed and the outer surface which, instead of being cylindrical or conical featuring thread through its entire length, as per the state of art implants, said outer surface, for the purposes of this patent, is provided with thirds of extreme surface provided with thread and intermediate third provided with threadless surface and concave profile, that is to say, a surface shaped by trunk-conical sections connected by the smaller bases and concave curved profiles.

This implant, as an advantage over the conventional ones, allows, when installed, to keep the part of its outer surface with conical profiles away from the bone wall of the implant bed, thus forming a chamber throughout the surrounding, which allows for the accumulation of a blood clot and protein secretions, which are responsible for the prompt restoration of the damaged region, whose clot shall receive nutrients from the bone wall, which in this case is not compressed by the implant thread.

This form of implant construction and functioning, therefore, overcomes the limitations of the usual ones.

Moreover, this implant offers advantages in allowing its use in more compact bones - that is, poorly irrigated bones that make the bone-integration difficult, comprising, in this case, patients submitted to treatments to increase the calcium density of the bone, in this case, using alendronate-based medications - which provide compaction of trabecular bone tissue, leaving it poor in nutrients with reduced irrigation. In this case, the fact of maintaining a chamber at the place of implant allows a few vessels to keep the blood clot nourished and alive, thus promoting the bone regeneration.

In addition to the above advantages, this implant is built and manufactured with levels of difficulty relatively similar to those of the usual ones and, therefore, the cost is within usual standards, in accordance with other goals of the invention.

Further, the present implant, in view of accelerating the bone-integration, decreases the time and cost of the treatment, thus making it accessible to a larger population range, in accordance with other goals of the invention.

The attached drawings refer to the improvement in dental implant, object of this patent, in which:
Images 1 to 4 show the implant in perspective, frontal, top and cut-off view indicated in image two;
Image 5 shows the implant and the indication on how it is installed; and
Images 6 to 9 show the implant in several sizes.

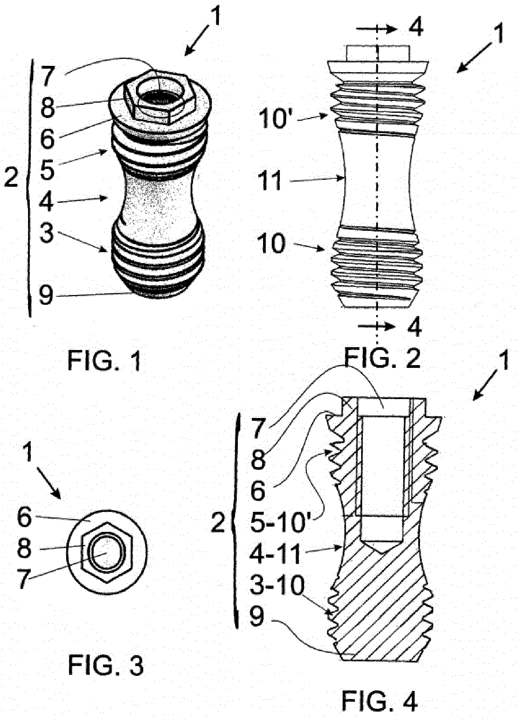

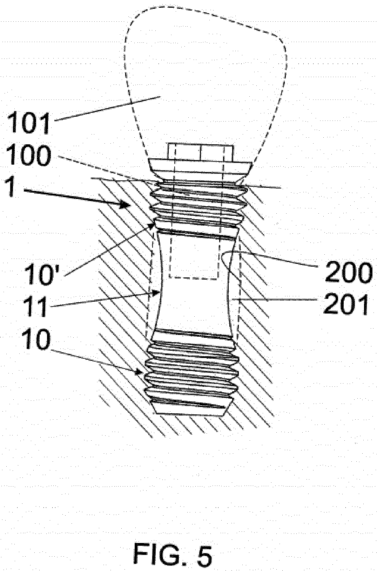

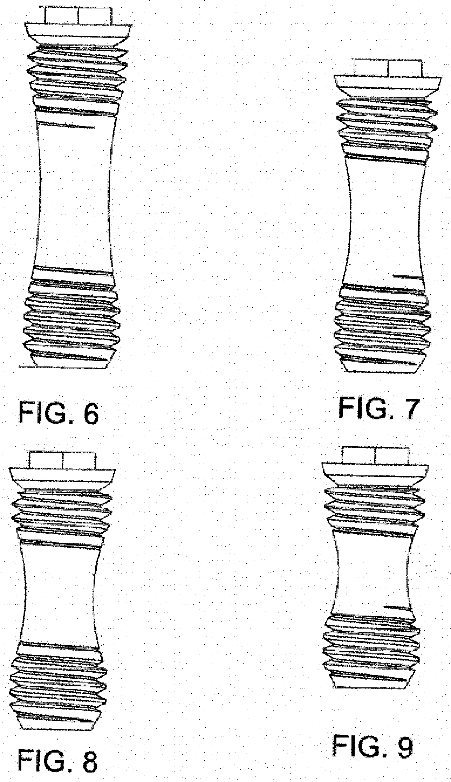

As shown in the images above and contemplated in the invention, the dental implant 1, object of this patent, is intended to form a dental implant device, formed, essentially (Figure 5): by the implant 1 itself, implantable in the bone of the patient; by abutment 100, mounted on the implant 1; and by dental prosthesis 101, attached to the abutment. The implant 1 is basically comprised (Images 1 and 3): by substantially cylindrical body 2 provided with a tip or top 3, intermediate section 4 and view tip 5, in which is provided top 6 surface featuring an non-passing axial negative surface (crease) that receives the abutment.

In the present improvement comprising the main matter to be protected in the patent, instead of the body 2 having the outer surface provided, along the entire length, with thread screwed into the bone, as occurs in conventional implants, said outer surface, in this improvement, is defined as (images 2 and 4): by extreme third provided with thread 10 attached to the tip or top 3; by opposing extreme third provided with a 10' thread attached to the top surface 6; and by intermediate smooth third (without thread) 11, with a concave curved profile, i.e., said intermediate third 11 is formed by two trunk-conical sections connected by the smaller bases, with curved concave profiles and whose larger bases are adjacent to threads 10 and 10'.

Therefore (image 5), when the implant is applied, the space created between the surgical bed (bone wall) 200 and the intermediate surface 11 of the implant promotes a chamber 201 for the accumulation of blood clot that communicates with the bone wall and will be nourished through microcirculation, providing conditions for the body to restore the injured area that is free and not subject to the compression caused by the implant, receiving nutrients from surrounding vessels and tissues, feeding and making the biological exchanges with the clot, thus keeping it alive and promoting the bone recovery more quickly.

In detail, (image 2, 4) the cylindrical body 2 presents taper in the tip or top 3 and in the tip view 5 the surface of top 6 provided with negative surface 7, this provided with non-cutting round edge 8, in ring shape, from which thread 10' is initiated, which extends through one third (1/3) of body 2 of the implant, with a self-threading thread, "self-tapping screw" type, in the middle third (1/3) presents the concave or negative surface or depression without the thread 11, in the sequence it is provided the other thread 10 in the other third (1/3) with greater diameter until the encounter with the basis of the platform, where upon the completion of such thread, there is a groove for accumulation of liquids in the cortical bone and initiates a platform, which has a conidian base, thus forming the basis to the surface of the platform, the characteristic of a chunk-shaped cap or sealing tap 9, promoting the closure and sealing of the surface of the cortical bone with the implant's receptor bed, preventing the contamination by the mouth.

The entire surface of the implant, after machining, might undergo a microsphere blasting process, thus randomly promoting on the surface values ranging from negative and positive, being microscopically characterized by a rough surface with micro-roughness or micro-retentions, or, further, presenting their own micro retentions left by the machining tools, which are perceptible via microscope, but appear smooth to the naked eye.

In addition to being the implant indicated to bones, Types I, II, III and IV, it is indicated for patients who are subject to treatments with Alendronates, (drugs that increase bone mineral density), acting in the bone reabsorption, once the chamber formed allows for the accumulation that the reconstituting elements are nourished with little or minimal communication with the micro vessels in the region.

When the implant is installed, the first third shall have its diameter bed smaller than the diameter of the implant, and the opposite third a largest diameter for attachment to the cortical bone.

The implants shall have different diameters, starting with the measurement of (images 6 to 9):
3,60mm x 9,3mm length and platform of 4.1 mm; 3,60 x 10,3mm; 3,60 x 11,3mm; 3,60x13,3mm and 3,6 x 15,3mm.
Diameter 4,0 x 9,3mm and platform of 4,1 mm; 4,0 x 10,3mm, 4,0 x 11,5 mm; 4,0 x 13,3 mm, 4,0 x 15,0mm;
Diameter: 4,6 mm x 9,3mm; 4,6 x 10,0mm; 4,6mm x 11,3mm; 4,6mm x 13,3mm; 4,6 mm x 13,3mm; 4,6mm x 15,3mm - platform 5,0.
Diameter of 5,0 x 9,3mm; 5,0 x 10,3mm; 5,0 x 11,3mm; 5,0 x 13,3mm; 5, 0 x15,3 mm length.

Within the above-described basic building, it is claimed that the implant, object of this patent, can present modifications regarding material, size, functional configuration and others, not surpassing the scope of protection requested in the patent.

## Claims

1. Improvement in dental implant, composition of a dental implant essentially formed: by the implant itself (1), implantable in the bone of the patient; by abutment (100), mounted on the implant (1); and by dental prosthesis (101), attached to the abutment; such implant (1) is basically composed: of substantially cylindrical body (2) provided with a tip or top (3), intermediate section (4) and view tip (5), in which is provided top surface (6) featuring an non-passing (7) axial negative surface (crease) that receives the abutment, **characterized by** defined outer surface: by extreme third provided with thread (10) attached to the tip or top (3); by opposing extreme third provided with a thread (10') attached to the top surface (6); and by intermediate smooth third (without thread) (11), with a concave curved profile, **characterized by** two trunk-conical sections connected by the smaller bases, with curved concave profiles and whose larger bases are adjacent to threads (10) and (10').

2. Improvement in dental implant, according to claim 1, **characterized by** the concave-profile threadless intermediate outer surface (11) provides for, once the implant (1) is applied, the creation of the chamber (201) between it and the surgical bed (Wall Bone) (200), for blood clot accumulation.

3. Improvement in dental implant, according to claim 1, **characterized by** the cylindrical body (2) presents taper in the tip or top (3) and in the tip view 5 the surface of top (6) provided with negative surface (7), which is provided with non-cutting round edge 8, in ring shape, from which thread (10') is initiated, which extends through one third of the body (2) of the implant; presenting in the middle third a concave or negative surface or depression without thread (11); in the sequence it is provided the other thread (10) in the other third with greater diameter until the encounter with the basis of the platform, where, upon the completion of such thread, there is a groove for accumulation of liquids in the cortical bone and initiates a platform, which has a conidian base, thus forming the basis to the surface of the platform, with the characteristic of a chunk-shaped cap or sealing tap (9), promoting the closure and sealing of the surface of the cortical bone with the implant's receptor bed.

4. Improvement in dental implant, according to claim 1 or 3, **characterized by** thread (10'), extended attached to the non-cutting ring-shaped round edge (8) be self-threading, like "self-tapping".

5. Improvement in dental implant, according to claims 1 or 3 or 4, **characterized by** all implant surface (1), after machining, might undergo a microsphere blasting process, thus forming the rough surface with micro-roughness or micro-retentions, or, further, presenting their own micro-retentions left by the machining tools.

6. Improvement in dental implant, according to claims 1 or 2 or 3 or 4 or 5, **characterized by** being indicated for bones Types I, II, III and IV, and patients undergoing treatments for increasing Bone Mineral Density.
